# FASCICULE DE BREVET EUROPEEN

(11) **EP 0 860 126 B1**
(45) Date de publication et mention de la délivrance du brevet: **14.08.2002**
(21) Numéro de dépôt: 98400290.7
(22) Date de dépôt: 10.02.1998
(51) Int. Cl.: A47C 20/04

(54) **Système de fixation d'un vérin sur au moins une barre**
System zur Befestigung eines Stellgliedes an einer Stange
System for connecting an actuator to a bar

(30) Priorité: 21.02.1997 FR 9702082
(43) Date de publication de la demande: 26.08.1998
(73) Titulaire: Meral, société anonyme, F-72800 Aubigné Racan (FR)
(72) Inventeur: Courtois, Alain, 41000 Blois (FR)
(74) Mandataire: Chambon, Gérard

(56) Documents cités:
- DE-A- 19 500 572
- DE-U- 9 417 433
- GB-A- 1 515 927

## Description

L'invention concerne un système de fixation d'un vérin sur au moins une barre et plus particulièrement un système de fixation à rotation sur des barres à section circulaire pour un vérin double effet.

L'invention s'applique notamment au domaine de l'actionnement des meubles articulés tels que lits ou fauteuils à parties relevables.

Notamment pour ce cas d'espèce, le vérin est généralement disposé entre deux barres dont au moins l'une est solidaire d'un châssis et il doit être fixé sur au moins l'une des barres de manière articulée en rotation tout en pouvant exercer sur celle-ci une force de traction ou de poussée.

A cet effet, jusqu'à présent, le corps du vérin était généralement articulé sur une patte soudée sur la barre, au moyen d'un étrier et d'un axe à vis et écrou.

Si un tel moyen assure une fixation qui répond bien aux fonctions souhaitées, il est clair qu'il nécessite une préparation spéciale de la barre tandis que l'installation n'est pas aisée et nécessite un outillage.

C'est pourquoi l'inventeur a imaginé un système particulièrement simple de conception, qui ne nécessite aucune préparation des barres et qui permet une mise en place particulièrement simple et rapide des vérins.

Le document DE-19 500 572 A divulgue toutefois, pour la fixation sur une barre, un dispositif d'actionnement comportant un logement pour ladite barre, pourvu d'une plaque de fermeture. Le logement présente un rétrécissement élastique et la plaque de fermeture qui est sollicitée à l'ouverture par le poids même du dispositif, est aménagée de manière à empêcher tout élargissement élastique du logement et même à accentuer son resserrement par effet gravitaire

Au contraire, l'inventeur a cherché un système simple et peu onéreux, qui permet en outre au vérin de tenir essentiellement par son propre poids avec un moyen de fermeture empêchant un décrochage accidentel courant, mais s'ouvrant automatiquement en cas de contrainte intempestive importante, susceptible de détériorer le vérin.

En effet, un tel vérin est disposé sous le mobilier à équiper avant expédition (par exemple un lit ou un fauteuil), celui-ci n'ayant généralement pas de pieds de telle sorte que le vérin se trouve ainsi très exposé aux contraintes du transport.

A cet effet et selon l'invention, le système de fixation sur au moins une barre, pour un vérin simple ou double effet pourvu classiquement d'un corps et d'une tige d'actionnement, et comportant au moins une attache, est notamment remarquable en ce que ladite attache est constituée par un crochet fixé sur la partie arrière du corps du vérin et/ou à l'extrémité frontale de sa tige d'actionnement et qui présente la forme d'un profilé en U dont les faces intérieures en regard, de ses ailes, sont dans des plans parallèles entre eux et sensiblement perpendiculaires à l'axe de ladite tige, ledit crochet étant pourvu d'un moyen de fermeture qui permet d'emprisonner la barre sur laquelle il doit être fixé mais qui peut s'ouvrir automatiquement sous une certaine contrainte, de telle sorte que toute action du vérin dans un sens ou dans l'autre crée une réaction sur le crochet et pas ou peu sur son moyen de fermeture, tandis que ce dernier s'ouvre automatiquement dès qu'une certaine contrainte intempestive s'exerce sur lui.

On aménage chaque crochet de manière telle qu'il s'ouvre vers le bas lorsque le vérin est en position de fonctionnement sensiblement horizontale de telle sorte que le poids de ce dernier s'exerce sur le fond dudit crochet contrairement au document Allemand précité et si une charge importante accidentelle est appliquée sur le dessous dudit vérin le moyen de fermeture s'ouvre alors automatiquement, préservant ainsi ledit vérin.

Selon un mode de réalisation, le moyen de fermeture du crochet est du type. articulé à accrochage élastique et de préférence dans ce cas, c'est une boucle en forme d'étrier, articulée sur l'une des ailes du crochet pour venir se loger dans une rainure ménagée sur l'aile opposée dudit crochet, de manière à se fixer élastiquement en ceinturant ladite aile opposée, en position de fermeture.

Avantageusement, pour fixer le vérin sur une barre de section circulaire, la section en U du crochet présente un fond semi-circulaire dont le diamètre correspond à celui de la barre sur laquelle il peut alors toumer en faisant office de palier.

De préférence dans ce cas, le crochet est positionné sur le corps du vérin de manière telle que l'axe de la tige d'actionnement passe par le plan diamétral du fond semi-circulaire du crochet et si en outre le moyen de fermeture est une boucle, celle-ci présente, par exemple, un profil en forme de V dont l'ouverture est tournée vers l'intérieur du crochet de manière à s'appliquer sur la barre selon deux génératrices de celle-ci.

Selon un mode de réalisation, le système comporte deux attaches fixées respectivement sur la partie arrière du corps du vérin et à l'extrémité frontale de sa tige d'actionnement de manière à pouvoir se fixer sur deux barres parallèles dont l'une est fixe par rapport à un châssis et l'autre montée mobile par rapport audit châssis de telle sorte que le vérin permet d'actionner la barre mobile.

Dans ce cas, pour des barres de section circulaire, la barre mobile est, par exemple, articulée en pivotement sur le châssis au moyen de bielles, de telle sorte que le vérin peut actionner ladite barre, chaque attache formant un palier de rotation tandis que les crochets sont avantageusement positionnés de manière telle que l'axe de la tige d'actionnement passe par les plans diamétraux des fonds semi-circulaires desdits crochets.

L'invention s'applique à de nombreux dispositifs mais plus particulièrement encore, comme déjà dit, pour fixer un vérin d'actionnement entre deux éléments, dont l'un est mobile relativement à l'autre, d'un meuble en partie articulé, tel qu'un lit ou un fauteuil.

L'invention sera bien comprise à la lecture de la description qui va suivre et qui se réfère aux dessins annexés dans lesquels:
- la figure 1 montre en élévation un vérin équipé d'un système selon l'invention, en cours de fixation,
- la figure 2 correspond à la figure 1, après fermeture du système,
- la figure 3 est une vue de dessous par rapport à la figure 2,
- les figures 4, 5 et 6 représentent à plus grande échelle le système de fixation dans les positions respectivement des figures 1 à 3,
- la figure 7 est une vue du système de fixation représenté du côté opposé par rapport à la figure 6,
- la figure 8 est une vue en bout selon la flèche F8 de la figure 2,
- la figure 9 est une vue en élévation en position fermée comme dans la figure 2 mais pour un système à deux attaches représenté en outre dans le cadre d'une application particulière,
- la figure 10 est une vue en bout selon la flèche F10 de la figure 9.

Sur les dessins on peut voir un vérin pourvu classiquement d'un corps 1 et d'une tige d'actionnement 2.

Le corps 1 comporte un cylindre 3 de section quelconque et bien sûr pas forcément circulaire, ainsi qu'une embase 4.

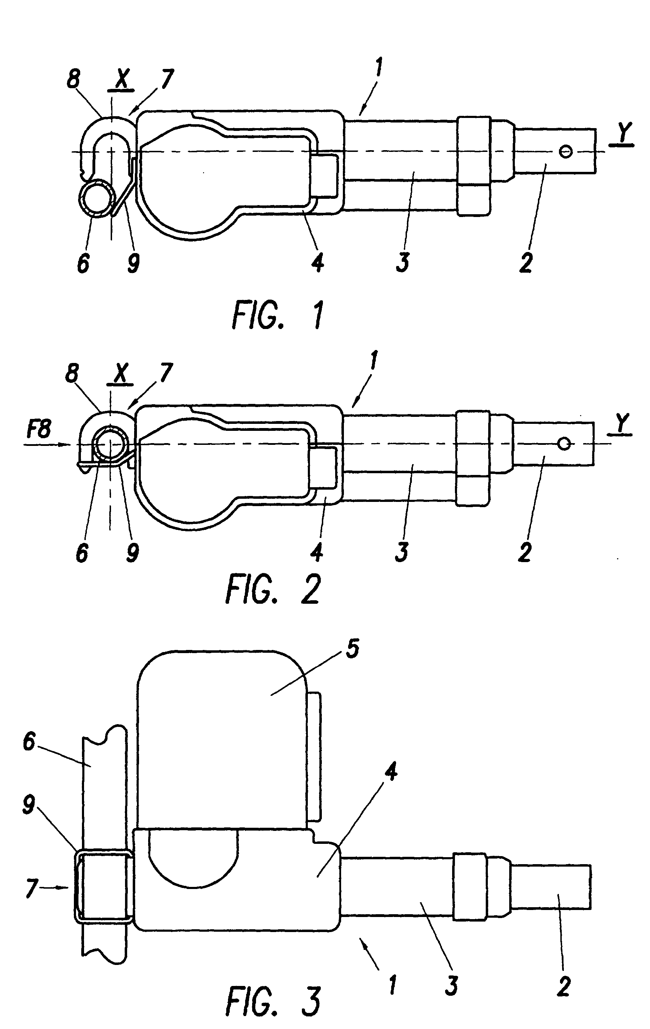

Il peut s'agir d'un vérin à simple ou à double effet, hydraulique, pneumatique, ou comme ici électrique à double effet, à vis et écrou par exemple et dont l'actionnement est obtenu par un moteur 5 (figure 3).

Dans le mode de réalisation des figures 1 à 8, le vérin (1, 2) est destiné à être fixé sur une barre sous forme ici d'un tube 6 de section circulaire.

Pour fixer le vérin sur le tube 6, ledit vérin est pourvu d'une attache 7 disposée à la partie arrière de l'embase 4 du corps du vérin (figures 1 à 8).

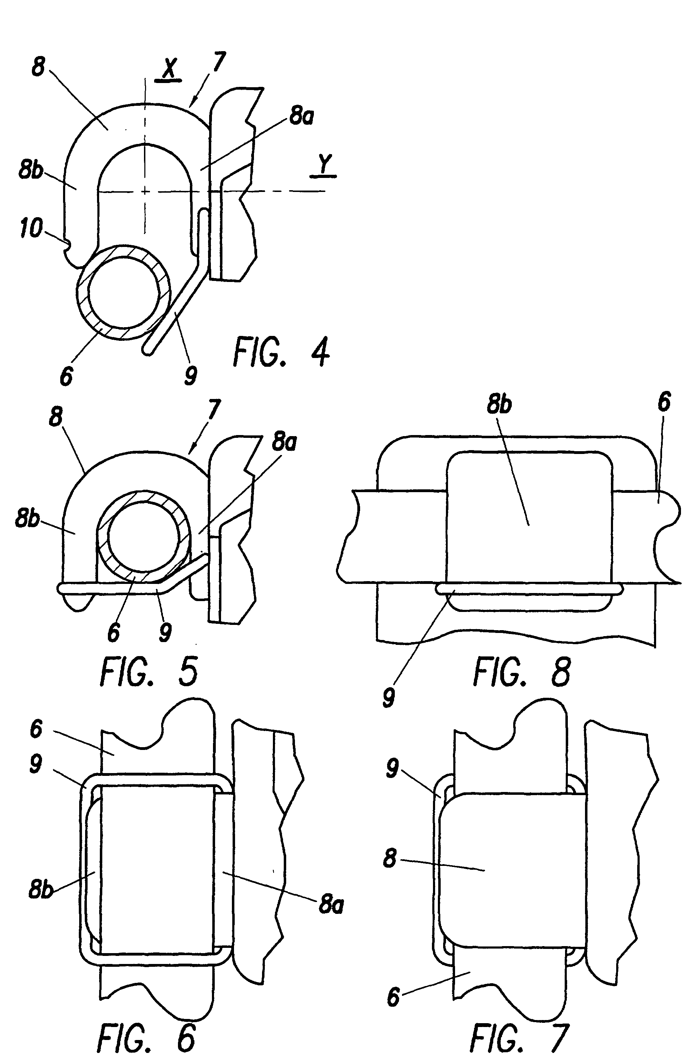

L'attache 7 est constituée, comme le montrent plus particulièrement les figures 4 à 8, d'un crochet 8, qui présente la forme d'un profilé en U dont le fond semi-circulaire possède un diamètre sensiblement identique à celui du tube 6 et dont les faces intérieures en regard, de ses ailes (8a,8b), sont dans des plans parallèles entre eux et donc parallèles au plan longitudinal médian X représenté qui s'étend lui perpendiculairement à l'axe Y de la tige d'actionnement 2, comme le montrent plus particulièrement les figures 1, 2 et 4.

En outre ici, comme le montrent les figures 1, 2 et 4, l'axe Y de la tige 2 passe par le plan diamétral du fond semi-circulaire du crochet.

Le crochet 8 est pourvu d'un moyen de fermeture comme ici une boucle 9 en forme d'étrier qui est articulée sur un côté du crochet, ici l'aile 8a du crochet, solidaire de l'embase 4 pour venir se bloquer élastiquement à force dans une rainure ou gorge 10 (figure 4) ménagée dans l'aile opposée 8b dudit crochet, la boucle 9 ceinturant ainsi ladite aile 8b.

Comme le montrent bien les figures 1, 2 et 4, 5 la boucle 9 présente un profil en forme de V très ouvert et dont l'ouverture est toumée vers l'intérieur du crochet 8 de telle sorte qu'en position de fermeture (figures 2 et 5), la boucle vient toucher le tube 6 en deux paires de points appartenant chacune à une génératrice dudit tube, l'une des branches du profil en V de la boude étant en outre ici sensiblement perpendiculaire au plan médian X du crochet.

On comprend que la mise en place du vérin est particulièrement simple et rapide puisqu'il suffit d'ouvrir la boucle 9 et d'insérer le tube 6 dans le crochet 8 (figures 1 et 4) jusqu'à ce que ledit tube 6 vienne dans le fond dudit crochet (figures 2 et 5), tandis que le pivotement vers l'intérieur de la boucle 9 jusqu'à sa mise en place dans la rainure 10 permet d'assurer le verrouillage de l'attache 7 sur le tube 6. Les caractéristiques élastiques de la boude et la profondeur de la rainure 10 seront choisies en fonction de la valeur de la contrainte pour laquelle on désire que ladite boucle s'ouvre.

Comme le montrent les figures, l'ensemble est disposé, en position de fonctionnement, de manière que le crochet 8 s'ouvre vers le bas (ici le vérin est horizontal mais il pourrait être incliné) de telle sorte, comme déjà dit, que le vérin est déjà maintenu par son propre poids qui s'exerce sur le fond dudit crochet.

Dans la position verrouillée des figures 2, 3 et 5 à 8, on comprend que toute action de la tige 2 (figures 2 et 3) dans un sens ou dans l'autre crée une réaction directe (selon l'axe Y) sur l'aile correspondante 8a, 8b (figures 4 et 5) du crochet sans agir sur la boucle 9, et ce, quelle que soit la position du vérin dans l'espace.

En outre on comprend que les formes du crochet 8 et de la boucle 9 permettent une rotation aisée du vérin autour du tube 6, l'attache 7 se comportant comme un palier de rotation.

Il est bien sûr particulièrement aisé de retirer le vérin en ouvrant la boucle 9.

Par ailleurs, du fait du choix des moyens de fermeture, on comprend que toute contrainte ou charge accidentelle importante effectuée par en dessous entraînera une ouverture automatique, ici de la boucle élastique , préservant ainsi le vérin. Toutefois, il pourrait bien sûr s'agir de tout autre moyen de fermeture, de préférence à accrochage élastique.

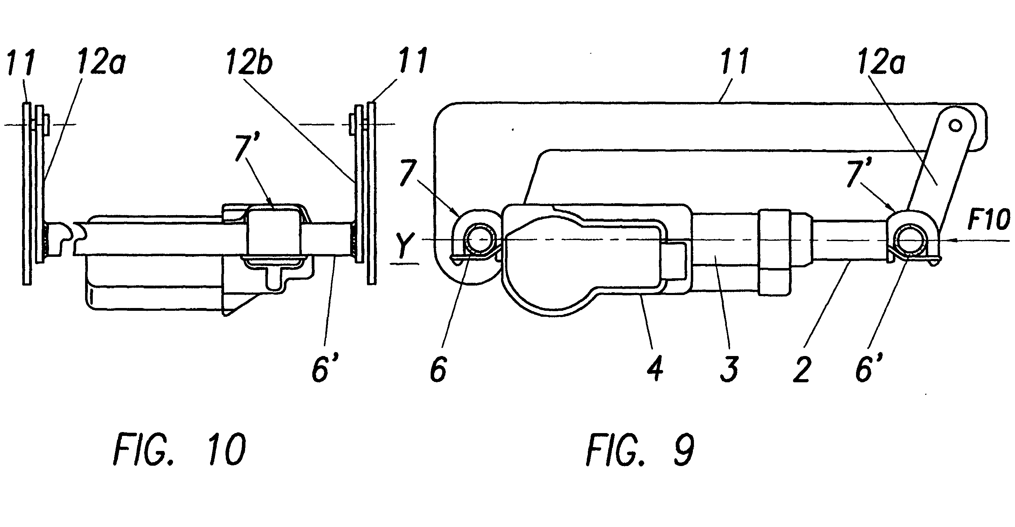

Les figures 9 et 10 montrent une application particulière dans laquelle on retrouve le même vérin (1, 2) que dans les autres figures, muni de la même attache 7 pour un tube 6, tandis que ledit vérin est en outre pourvu d'une autre attache semblable 7' disposée à l'extrémité frontale de la tige 2 et qui est destinée à fixer le vérin sur un deuxième tube 6'.

Les deux attaches 7, 7' sont disposées symétriquement sur l'axe Y de la tige 2 et forment ainsi deux paliers de rotation.

Le tube 6 est, par exemple, solidaire d'un châssis 11 et le tube 6' est articulé audit châssis 11 au moyen de bielles pivotantes 12a, 12b (figures 9 et 10).

On comprend qu'une action en translation de la tige 2 crée un effort de poussée ou de traction sur le tube mobile 6' qui peut ainsi pivoter dans un sens ou dans l'autre par rapport au châssis 11.

Les figures 9 et 10 représentent, par exemple, une partie d'un meuble articulé et plus particulièrement un lit ou un fauteuil.

## Revendications

1. Système de fixation sur au moins une barre (6, 6'), pour un vérin simple ou double effet pourvu d'un corps (1) et d'une tige d'actionnement (2), et comportant au moins une attache (7, 7'), ***caractérisé* en ce que** ladite attache (7,7') est constituée par un crochet (8) fixé sur la partie arrière (4) du corps du vérin et/ou à l'extrémité frontale de sa tige d'actionnement (2) et qui présente la forme d'un profilé en U dont les faces intérieures en regard, de ses ailes (8a,8b), sont dans des plans parallèles entre eux et sensiblement perpendiculaires à l'axe (Y) de ladite tige (2), ledit crochet étant pourvu d'un moyen de fermeture (9) qui permet d'emprisonner la barre (6, 6') sur laquelle il doit être fixé mais qui peut s'ouvrir automatiquement sous une certaine contrainte, de telle sorte que toute action du vérin dans un sens ou dans l'autre crée une réaction sur le crochet et pas ou peu sur son moyen de fermeture, tandis que ce dernier s'ouvre automatiquement dès qu'une certaine contrainte intempestive s'exerce sur lui.

2. Système de fixation selon la revendication 1, ***caractérisé* en ce que** le moyen de fermeture (9) du crochet (8) est du type articulé à accrochage élastique.

3. Système de fixation selon la revendication 2, ***caractérisé* en ce que** le moyen de fermeture du crochet (8) est une boucle (9) en forme d'étrier, articulée sur l'une (8a) des ailes du crochet pour venir se loger dans une rainure (10) ménagée sur l'aile opposée (8b) dudit crochet, de manière à se fixer élastiquement en ceinturant ladite aile opposée (8b), en position de fermeture.

4. Système de fixation selon l'une des revendications 1 à 3 pour fixer le vérin sur une barre (6, 6') de section circulaire, ***caractérisé* en ce que** le crochet (8) en U présente un fond semi-circulaire dont le diamètre correspond à celui de la barre sur laquelle il peut alors tourner en faisant office de palier.

5. Système de fixation selon la revendication 4, ***caractérisé* en ce que** le crochet (8) est positionné sur le corps du vérin de manière telle que l'axe (Y) de la tige d'actionnement (2) passe par le plan diamétral du fond semi-circulaire du crochet.

6. Système de fixation selon l'une des revendications 4 ou 5 en tant que rattachées à la revendication 3, ***caractérisé* en ce que** la boucle (9) présente un profil en forme de V dont l'ouverture est tournée vers l'intérieur du crochet (8) de manière à s'appliquer sur la barre (6) selon deux génératrices de celle-ci.

7. Système de fixation selon l'une quelconque des revendications 1 à 6, **ca*ractérisé* en ce qu'**il comporte deux attaches (7, 7') fixées respectivement sur la partie arrière (4) du corps du vérin et à l'extrémité frontale de sa tige d'actionnement (2) de manière à pouvoir se fixer sur deux barres parallèles (6, 6') dont l'une (6) est fixe par rapport à un châssis (11) et l'autre (6') montée mobile par rapport audit châssis de telle sorte que le vérin permet d'actionner la barre mobile (6').

8. Système de fixation selon la revendication 7, en tant que rattachée à l'une des revendications 4 à 6, pour barres de sections circulaires, *caractérisé* en que la barre mobile (6') est articulée en pivotement sur le châssis (11) au moyen de bielles (12a, 12b) de telle sorte que le vérin peut actionner ladite barre (6'), chaque attache (7, 7') formant un palier de rotation.

9. Système de fixation selon la revendication 8, **caractérisé en ce que** les crochets (8) sont positionnés de manière telle que l'axe (Y) de la tige d'actionnement (2) passe par les plans diamétraux des fonds semi-circulaires desdits crochets.

10. Système de fixation selon l'une des revendications 1 à 9, **caractérisé en ce qu'**il est destiné à fixer un vérin d'actionnement entre deux éléments, dont l'un (6') est mobile relativement à l'autre (6, 11), d'un meuble en partie articulé, tel qu'un lit ou un fauteuil.

## Patentansprüche

1. System zur Befestigung eines einfachen oder doppelt wirksamen Stellgliedes an wenigstens einer Stange (6, 6'), mit einem Grundkörper (1) und einer Betätigungsstange (2) wobei das System wenigstens eine Halterung (7, 7') aufweist, **dadurch gekennzeichnet, dass** die besagte Halterung (7, 7') durch einen an dem rückwärtigen Teil des Stellgliedkörpers und / oder dem stirnseitigen äußeren Ende seiner Befestigungsstange (2) befestigten Haken (8) gebildet ist und dass sie die Form eines U-Profils aufweist, dessen den beiden Flügeln (8a, 8b) zuordenbare, gegenüberliegende innere Flächen in zueinander parallel angeordneten Ebenen und im Wesentlichen senkrecht zu der Achse (Y) der Betätigungsstange (2) angeordnet liegen, wobei der Haken mit einem Schließelement (9) versehen ist, das ein Einschließen derjenigen Stange erlaubt, an der er befestigt werden soll, sich aber unter einem bestimmten Druck derart automatisch öffnet, dass jegliche Betätigung des Stellgliedes in der einen oder anderen Richtung eine Reaktion auf den Haken und nicht oder nur zum geringen Teil auf dessen Schließelement verursacht, während letzteres sich automatisch öffnet, sobald ein bestimmter, unpassender Druck auf dieses ausgeübt wird.

2. System zur Befestigung nach Anspruch 1, **dadurch gekennzeichnet, dass** das Schließelement (9) des Hakens (8) als elastische Ankopplung beweglich verbindbar ausgebildet ist.

3. System zur Befestigung nach Anspruch 2, **dadurch gekennzeichnet, dass** das Schließelement des Hakens (8) als Schnalle (9) in Form eines Steigbügels ausgebildet ist, die mit einem der Flügel (8a) des Hakens beweglich verbunden ist, um in einer Nut (10) des gegenüberliegenden Flügels (8b) des Hakens aufgenommen zu werden, wobei sie in der Schließposition, den gegenüberliegenden Flügel (8b) umfassend, elastisch befestigt ist.

4. System zur Befestigung nach einem der Ansprüche 1 bis 3 zum Befestigen des Stellgliedes an einer Stange mit kreisförmigem Querschnitt, **dadurch gekennzeichnet, dass** der U-Haken einen halbkreisförmigen Grund aufweist, dessen Durchmesser demjenigen der Stange entspricht, so dass er auf dieser drehbar ist und die Funktion eines Lagers übernimmt.

5. System zur Befestigung nach Anspruch 4, **dadurch gekennzeichnet, dass** der Haken (8) am Körper des Stellgliedes derart angeordnet ist, dass die Achse (Y) der Betätigungsstange (2) durch die Durchmesserebene des halbkreisförmigen Grundes des Hakens verläuft.

6. System zur Befestigung nach Anspruch 4 oder 5 und insoweit auch im Zusammenhang mit Anspruch 3, **dadurch gekennzeichnet, dass** die Schnalle (9) ein V-förmiges Profil aufweist, dessen Öffnung derart zum Innern des Hakens hin gewandt ist, dass es an der Stange (6) entlang zweier von deren Mantellinien angeordnet ist.

7. System zur Befestigung nach einem der Ansprüche 1 bis 6, **dadurch gekennzeichnet, dass** es zwei Halterungen (7, 7') aufweist, die an dem rückwärtigen Teil (4) des Stellgliedkörpers beziehungsweise an dem stirnseitigen äußeren Ende seiner Befestigungsstange so befestigt sind, dass sie an zwei parallelen Stangen (6, 6') befestigbar sind, von denen die eine (6) bezüglich eines Gestells festgelegt und die andere (6') an dem Gestell derart bewegbar angebracht ist, dass das Stellglied die bewegliche Stange (6') antreibt.

8. System zur Befestigung nach Anspruch 7 für Stangen mit einem kreisförmigen Querschnitt und insoweit auch im Zusammenhang mit den Ansprüchen 4 bis 6, **dadurch gekennzeichnet, dass** die bewegliche Stange (6') an dem Gestell (11) durch eine Pleuelstange (12a, 12b) derart schwenkbeweglich angelenkt ist, dass das Stellglied die Stange (6') antreibt, sodass jede Halterung (7, 7') ein Drehlager bildet.

9. System zur Befestigung nach Anspruch 8, **dadurch gekennzeichnet , dass** die Haken (8) so angeordnet sind, dass die Achse (Y) der Betätigungsstange (2) durch die Durchmesserebenen des jeweils halbkreisförmigen Grundes der besagten Hakens verläuft.

10. System zur Befestigung nach einem der Ansprüche 1 bis 9, **dadurch gekennzeichnet, dass** es dazu vorgesehen ist, ein Betätigungsstellglied zwischen zwei Elementen eines teilweise gelenkbeweglichen Möbels, etwa eines Betts oder eines Sessels, zu befestigen, von denen das eine (6') relativ zu dem anderen (6) beweglich ist.

## Claims

1. System for fixture to at least one bar (6, 6') for a single-acting or double-acting cylinder provided with a body (1) and an actuating rod (2), and comprising at least one means of attachment (7, 7'), **characterised in that** said means of attachment (7, 7') is constituted by a hook (8) fixed on the rear part (4) of the body of the cylinder and/or to the front end of its actuating rod (2) and which presents the shape of a U profile, of which the inner facing faces of its limbs (8a, 8b) are in planes which are parallel with one another and substantially perpendicular to the axis (Y), of said rod (2), said hook being provided with a means of closure (9) which makes it possible to hold the bar (6, 6') on which it has to be fixed but which can open automatically under a certain stress such that any action of the cylinder in one direction or in the other creates a reaction on the hook and not or only minimally on its means of closure, whereas the latter opens automatically as soon as a certain inopportune stress is applied to it.

2. System for fixture according to claim 1, **characterised in that** the means of closure (9) of the hook (8) is of the articulated elastic attachment type.

3. System for fixture according to claim 2, **characterised in that** the means of closure of the hook (8) is a loop (9) in the form of a stirrup, articulated on one (8a) of the limbs of the hook so as to be lodged in a groove (10) formed in the opposite limb (8b) of said hook in such a way as to be fixed elastically, embracing said opposing limb (8b), in the closed position.

4. System for fixture according to one of claims 1 to 3 for fixing the cylinder to a bar (6, 6') of circular section, **characterised in that** the U-shaped hook (8) exhibits a semi-circular bottom the diameter of which corresponds to that of the bar on which it can then turn, serving as a bearing.

5. System for fixture according to claim 4, **characterised in that** the hook (8) is positioned on the body of the cylinder so that the axis (Y) of the actuating rod (2) passes through the diametrical plane of the semi-circular bottom of the hook.

6. System for fixture according to one of claims 4 or 5, linked to claim 3, **characterised in that** the loop (9) exhibits a V-shaped profile the opening of which is turned towards the inside of the hook (8) in such a way as to be applied to the bar (6) along two generating lines of the latter.

7. System for fixture according to any one of claims 1 to 6, **characterised in that** it comprises two means of attachment (7, 7') fixed respectively to the rear part (4) of the body of the cylinder and to the front end of its actuating rod (2) in such a way as to be able to be fixed on two parallel bars (6, 6') of which one (6) is fixed in relation to a frame (11) and the other (6') fitted so that it can move in relation to said frame such that the cylinder allows actuation of the moving bar (6').

8. System for fixture according to claim 7, linked to one of claims 4 to 6, for bars of circular sections, **characterised in that** the moving bar (6') is articulated pivotably on the frame (11) by means of link rods (12a, 12b) such that the jack can actuate said bar (6'), each means of attachment (7, 7') forming a rotational bearing.

9. System for fixture according to claim 8, **characterised in that** the hooks (8) are positioned in such a way that the axis (Y) of the actuating rod (2) passes through the diametrical planes of the semi-circular bottoms of said hooks.

10. System for fixture according to one of claims 1 to 9, **characterised in that** it is designed to fix an actuating cylinder between two elements of which one (6') can move relative to the other (6, 11), of a partly articulated piece of furniture such as a bed or an armchair.
